# FASCICULE DE BREVET EUROPEEN

(11) **EP 3 752 454 B1**
(45) Date de publication et mention de la délivrance du brevet: **03.04.2024**
(21) Numéro de dépôt: 18709670.6
(22) Date de dépôt: 16.02.2018
(51) Int. Cl.: C01B 3/38, C10L 3/10, F25J 1/02, F25J 1/00

(54) **SYNERGIES D'UN PROCÉDÉ DE LIQUÉFACTION DE GAZ NATUREL DANS UN PROCÉDÉ DE PRODUCTION DE GAZ DE SYNTHÈSE**
SYNERGIEN EINES ERDGASVERFLÜSSIGUNGSPROZESSES IN EINEM SYNTHESEGASPRODUKTIONSPROZESS
SYNERGIES OF A NATURAL GAS LIQUEFACTION PROCESS IN A SYNTHESIS GAS PRODUCTION PROCESS

(43) Date de publication de la demande: 23.12.2020
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: COSTA DE BEAUREGARD, Pierre, 92130 92130 ISSY LES MOULINEAUX (FR); MARTY, Pascal, 94360 BRY SUR MARNE (FR); MOREL, Thomas, 93160 NOISY LE GRAND (FR)
(74) Mandataire: Air Liquide
(86) Numéro de dépôt international: PCT/FR2018/050381
(87) Numéro de publication internationale: WO 2019/158828

(56) Documents cités:
- WO-A1-2018/087496
- WO-A1-2018/087497
- WO-A1-2018/087499
- WO-A1-2018/087500
- US-A1- 2010 011 663
- US-A1- 2011 174 016
- US-A1- 2014 248 205
- US-B1- 6 692 711

## Description

La présente invention concerne un procédé de liquéfaction d'un courant d'hydrocarbures tel que le gaz naturel en combinaison d'un procédé de production de gaz de synthèse.

L'invention concerne une intégration d'un procédé de liquéfaction de gaz naturel dans un procédé de production de gaz de synthèse par réformage à la vapeur d'eau surchauffée, oxydation partielle ou réformage autothermique.

Ces technologies de production de gaz de synthèse nécessitent parfois l'utilisation de grandes quantités de gaz naturel utilisées comme courant d'alimentation mais aussi comme source de chauffe du procédé.

Il est aussi souhaitable de liquéfier le gaz naturel pour un certain nombre de raisons. A titre d'exemple, le gaz naturel peut être stocké et transporté sur de longues distances plus facilement à l'état liquide que sous forme gazeuse, car il occupe un volume plus petit pour une masse donnée et n'a pas besoin d'être stocké à une pression élevée.

Les procédés de génération de gaz de synthèse ont en général comme produits finis l'hydrogène, le monoxyde de carbone ou un mélange des deux (appelé « oxogas », voire un mélange H₂/CO/CO₂ (production de méthanol) ou un mélange N₂/H₂ (production d'ammoniaque). Chacun de ces procédés co-génère en outre de la vapeur plus ou moins surchauffée.

Après une unité de comptage et éventuellement de compression ou décompression, la production de gaz de synthèse inclut généralement les étapes suivantes:
1. Une étape de désulfurisation à chaud : après une pré-chauffe (350°C-400°C), tous les dérivés soufrés contenus dans le gaz naturel sont transformés en H₂S par catalyse dans un réacteur d'hydrogénation (CoMox). Puis l'H₂S est retiré par catalyse (sur lit de ZnO par exemple).
2. Une étape de pré-reformage éventuelle (étape principalement présente dans les unités de réformage à la vapeur): à haute température (500°C-550°C environ) avec excès de vapeur. Puis en présence de catalyseur : conversion des chaînes hydrocarbonées contenant au moins deux atomes de carbone en méthane avec co-production de monoxyde de carbone, de dioxyde de carbone (CO₂) et d'hydrogène.
3. Etape de reformage qui consiste à faire réagir à haute température (850°C-950°C) les hydrocarbures avec de la vapeur d'eau pour produire de l'hydrogène, du CO et du CO₂.

En aval des unités de production de gaz de synthèse, les produits généralement valorisés sont le monoxyde de carbone (CO), l'hydrogène (H₂) ou un mélange H₂/CO.

Le cas échéant, la dernière étape du procédé de production de gaz de synthèse peut également être une :
- Etape d'oxydation partielle sur lit catalytique (réformeur autothermique) qui consiste à faire réagir l'oxygène avec les hydrocarbures à haute température (800°C-1200°C) pour produire davantage de CO ;
- Une étape de conversion du CO en H₂ dans un réacteur catalytique dans le cas d'une production poussée d'hydrogène ;

La purification du gaz de synthèse produit peut alors être faite soit par :
- Une mise en oeuvre d'un PSA pour purifier le flux riche en hydrogène produit ; ou
- Un lavage aux amines pour extraire le CO₂ du gaz de synthèse dans les cas de production de CO ou d'oxogas ; et
- Une purification dans une boîte froide du flux riche en CO produit ; ou
- Le passage du gaz produit à travers une membrane pour ajuster le ratio H₂/CO requis pour la qualité de l'oxogas à produire.

Les unités de production de gaz de synthèse nécessitent en général un apport constant de chaleur assurée par un système de fuel. Ce fuel est constitué par tout ou partie de gaz naturel, mais aussi de courants riches en hydrocarbures disponibles tels que, par exemple, ceux rejetés par des unités placées en aval de l'unité de production de gaz de synthèse (Off Gas PSA, flux riche en méthane ou riche en hydrogène en sortie de boite froide...) ou du site industriel.

Il est nécessaire de s'assurer que le bilan fuel est équilibré. Cela signifie que l'ensemble de l'énergie calorifique contenue dans les courants rejetés vers le système de fuel ne doit pas excéder les besoins en chaleur de l'unité de production de gaz de synthèse et éventuellement d'autres unités situées à proximité partageant le même réseau de fuel.

Dans le cas contraire, tout ou partie de certains courants rejetés vers le système du fuel devraient être renvoyé en continu vers une torche, ce qui n'est pas acceptable en particulier pour des contraintes d'émissions à l'atmosphère.

Par ailleurs, de manière générale, les unités de liquéfaction de gaz naturel permettent de mettre en oeuvre un procédé de liquéfaction comprenant généralement les trois étapes suivantes :
1. Un « prétraitement » qui élimine du gaz naturel à liquéfier les impuretés susceptibles de geler (H₂0, CO₂, dérivés soufrés, mercure etc...) ;
2. Extraction des hydrocarbures lourds et des dérivés aromatiques pouvant geler lors de la liquéfaction. Cette étape peut avoir lieu en amont ou en parallèle de la liquéfaction ;
3. Liquéfaction par refroidissement du gaz naturel à une température cryogénique (typiquement -160°C) grâce à un cycle réfrigérant et éventuellement accompagnée également d'un retrait des hydrocarbures lourds/dérivés aromatiques susceptibles de geler. US2011/174016 divulgue un procédé de liquéfaction de gaz naturel en combinaison d'un procédé de production de gaz de synthèse.

Les inventeurs de la présente invention ont mis au point une solution permettant une valorisation de courants issus de l'unité de liquéfaction de gaz naturel vers le système de fuel du procédé de génération. Cette intégration entre les deux procédés présente de nombreux avantages de synergies.

La présente invention a pour objet un procédé de liquéfaction de gaz naturel en combinaison d'un procédé de production de gaz de synthèse, le procédé de liquéfaction comprenant les étapes suivantes :
- Etape a) : prétraitement d'un gaz naturel d'alimentation afin d'éliminer les impuretés susceptibles de geler au cours du procédé de liquéfaction au moyen (i) d'un système de prétraitement mettant aussi en oeuvre un courant de régénération ;
- Etape b) : extraction, à partir du courant gazeux issu de l'étape a), d'un courant enrichi en hydrocarbures ayant plus de deux atomes de carbone et d'un courant appauvri en hydrocarbures ayant plus de deux atomes de carbone;
- Etape c) : liquéfaction du courant gazeux appauvri en hydrocarbures ayant plus de deux atomes de carbone issu de l'étape b) ;
le procédé de production de gaz de synthèse comprenant les étapes suivantes :
- Etape a') : désulfurisation à une température supérieure à 350°C d'un courant d'alimentation de gaz naturel ;
- Etape b') : pré-réformage facultatif, à une température supérieure à 500°C afin de convertir les chaînes hydrocarbures contenant au moins deux atomes de carbone du courant gazeux issu de l'étape a') en méthane ;
- Etape c') : réformage consistant à faire réagir à une température supérieure à 800°C le courant gazeux issu de l'étape a') ou b') avec de la vapeur d'eau pour produire de l'hydrogène, du dioxyde de carbone et du monoxyde de carbone ;
caractérisé en ce qu'au moins une partie de la source de chaleur nécessaire au procédé de production de gaz de synthèse est produite par au moins une partie du courant de régénération mis en oeuvre lors de l'étape a). l'énergie calorifique du courant de régénération mis en oeuvre lors de l'étape a) représentant de 5% à 35% de préférence de 10& à 20% de la quantité de fuel de la source de chaleur nécessaire au procédé de production de gaz de synthèse .
- Le système de prétraitement mis en oeuvre à l'étape a) peut être un système de séparation par adsorption mettant en oeuvre un courant de régénération ou un système de lavage aux amines suivi en aval d'une unité de séchage, cette unité de séchage mettant aussi en oeuvre un courant de régénération.

Selon d'autres modes de réalisation, l'invention a aussi pour objet :
- Un procédé tel que défini précédemment, caractérisé en ce que l'étape a) consiste en un prétraitement par adsorption au moyen d'un système d'adsorption comprenant entre deux et cinq contenants d'au moins une couche d'adsorbant et au moins un dispositif de chauffage et/ou de refroidissement d'un courant d'adsorption et/ou de régénération circulant dans ledit système d'adsorption.
- Un procédé tel que défini précédemment, caractérisé en ce que le produit H₂S est extrait par catalyse.
- Un procédé tel que défini précédemment, caractérisé en ce que les impuretés susceptibles de geler au cours du procédé de liquéfaction éliminées au cours de l'étape a) comprennent l'eau, le dioxyde de carbone et les dérivés soufrés contenus dans le gaz d'alimentation
- Un procédé tel que défini précédemment, caractérisé en ce qu'au cours de l'étape c), le courant de gaz naturel appauvri en hydrocarbures ayant plus de deux atomes de carbone issu de l'étape b) est liquéfié à une température inférieure à -140°C au moyen d'unité de liquéfaction de gaz naturel comprenant au moins un échangeur de chaleur principal et un système de production de frigories.
- Un procédé tel que défini précédemment, caractérisé en ce que le courant d'alimentation de gaz naturel mis en oeuvre à l'étape a) et le courant d'alimentation de gaz naturel mis en oeuvre à l'étape a') proviennent d'un même courant d'alimentation de gaz naturel.
- Un procédé tel que défini précédemment, caractérisé en ce que l'unité de production de gaz de synthèse est une unité de production d'hydrogène par reformage à la vapeur ayant une capacité de production d'hydrogène d'au moins 20,000 Nm³/h.
- Procédé tel que défini précédemment, caractérisé en ce que le courant de régénération mis en oeuvre lors de l'étape a) entraine un excès du bilan fuel de l'unité de production de gaz de synthèse et est renvoyé vers le courant d'alimentation de l'unité de production de gaz de synthèse.

Par ailleurs, si la pression du gaz de régénération est supérieure à la pression du réseau fuel, il est possible de se passer de compresseurs/machines tournantes, ce qui représente une économie importante sur le coût de l'unité de liquéfaction de gaz naturel.

Le courant d'hydrocarbures à liquéfier est généralement un flux de gaz naturel obtenu à partir d'un réseau de gaz domestique distribué via des pipelines.

L'expression "gaz naturel" telle qu'utilisée dans la présente demande se rapporte à toute composition contenant des hydrocarbures dont au moins du méthane. Cela comprend une composition « brute » (préalablement à tout traitement ou lavage), ainsi que toute composition ayant été partiellement, substantiellement ou entièrement traitée pour la réduction et/ou élimination d'un ou plusieurs composés, y compris, mais sans s'y limiter, le soufre, le dioxyde de carbone, l'eau, le mercure et certains hydrocarbures lourds et aromatiques.

L'échangeur de chaleur peut être tout échangeur thermique, toute unité ou autre agencement adapté pour permettre le passage d'un certain nombre de flux, et ainsi permettre un échange de chaleur direct ou indirect entre une ou plusieurs lignes de fluide réfrigérant, et un ou plusieurs flux d'alimentation.

Habituellement, le flux de gaz naturel est composé essentiellement de méthane. De préférence, le courant d'alimentation comprend au moins 80% mol de méthane. En fonction de la source, le gaz naturel contient des quantités d'hydrocarbures plus lourds que le méthane, tels que par exemple l'éthane, le propane, le butane et le pentane ainsi que certains hydrocarbures aromatiques. Le flux de gaz naturel contient également des produits non-hydrocarbures tels que l'azote (teneur variable mais de l'ordre de 5% mol par exemple) ou d'autres impuretés H₂O, CO₂, H₂S et d'autres composés soufrés, le mercure et autres (0,5% à 5% mol environ).

Le flux d'alimentation contenant le gaz naturel est donc prétraité avant d'être introduit dans l'échangeur de chaleur. Ce prétraitement comprend la réduction et/ou l'élimination des composants indésirables tels que généralement le CO₂ et le H₂O mais aussi H₂S et d'autres composés soufrés ou le mercure.

Afin d'éviter le gel de ces derniers au cours de la liquéfaction du gaz naturel et/ou le risque d'endommagement des équipements situés en aval (par des phénomènes de corrosion par exemple), il convient de les retirer.

Un moyen permettant de retirer le CO₂ du courant de gaz naturel est par exemple un lavage aux amines situé en amont d'un cycle de liquéfaction.

Le lavage aux amines sépare le CO₂ du gaz d'alimentation par un lavage du courant de gaz naturel par une solution d'amines dans une colonne d'absorption. La solution d'amines enrichie en CO₂ est récupérée en cuve de cette colonne d'absorption et est régénérée à basse pression dans une colonne de régénération de l'amine (ou stripping en anglais).

Une alternative au traitement par lavage aux amines peut être l'adsorption par inversion de pression et/ou de température. Les avantages d'un tel procédé sont décrits ci-après.

Ce procédé de séparation exploite le fait que sous certaines conditions de pression et de température certains constituants du gaz (CO₂, H₂O en particulier) ont des affinités particulières vis-à-vis d'un matériau solide, l'adsorbant (des tamis moléculaires par exemple).

L'adsorption est un processus réversible et il est possible de régénérer l'adsorbant en abaissant la pression et/ou élevant la température de l'adsorbant pour libérer les constituants du gaz adsorbés.

Ainsi, en pratique, un système de séparation par adsorption est constitué de plusieurs (entre deux et cinq) « bouteilles » contenant une ou plusieurs couches d'adsorbants ainsi que des appareils dédiés au chauffage/refroidissement du courant d'adsorption et/ou de régénération.

Par rapport à un lavage aux amines classique, le pré-traitement présente un certain nombre d'avantages :
- son coût ;
- sa simplicité d'opération ;
- la possibilité d'éviter un certain nombre d'utilités (l'appoint en amine ou en eau déminéralisée).

Ces avantages sont particulièrement importants pour des unités de liquéfaction de gaz naturel de petites tailles (produisant par exemple moins de 50 000 tonnes de gaz naturel liquéfié par an).

Un exemple de mise en oeuvre est illustré par l'exemple suivant.

La production d'hydrogène par reformage catalytique nécessite en apport continu de chaleur fournie par un réseau de fuel gas.

Une unité de reformage à la vapeur d'une capacité nominale de production d'hydrogène de 130 000 Nm³/h environ est mise en oeuvre.

Les besoins en chaleur nécessaire pour l'unité de production d'hydrogène sont majoritairement fournies (75% environ) par le gaz résiduel issu de la dernière étape de purification de l'hydrogène dans l'unité de production d'hydrogène (purification via tamis moléculaire (Pressure Swing Adsorption / PSA)). L'appoint (25% environ) est fourni par une source externe à l'unité de production d'hydrogène (provenant par exemple du courant d'alimentation de l'unité ou d'un système fuel externe).

En plaçant une petite unité de production de gaz naturel d'une capacité de 40,000 tonnes de gaz naturel liquéfié produit par année à proximité de l'unité de production d'hydrogène, il est possible de renvoyer certains débits vers le réseau du fuel de l'unité de production d'hydrogène. L'appoint fourni par une source externe sera diminué d'autant.
▪ Dans le cas où le prétraitement du gaz naturel est assuré par un procédé d'adsorption, le gaz de régénération renvoyé dans le réseau fuel représenterait environ 15% du bilan fuel.
▪ Les hydrocarbures lourds extraits du liquéfacteur de gaz naturel et les vapeurs de gaz naturel générées au niveau du stockage de gaz naturel liquéfié et/ou de la baie de chargement auront une importance moindre dans le bilan fuel (inférieur à 1%).

L'appoint en source de chaleur externe est ainsi réduit de 25% à 10% environ.

Cette intégration permet de réduire drastiquement le nombre d'équipements dédiés sur des courants secondaires de l'unité de liquéfaction de gaz naturel :
▪ hydrocarbures lourds : l'intégration permet par exemple d'éviter un incinérateur et/ou un système d'extraction des hydrocarbures lourds coûteux pour des unités de petite taille.
▪ vapeurs de gaz naturel générées au niveau du stockage de gaz naturel liquéfié et/ou de la baie de chargement : l'intégration permet par exemple d'éviter un compresseur pour recycler ces vapeurs dans le courant de liquéfaction de gaz naturel. Ce compresseur peut être coûteux dans des liquéfacteurs de petites tailles.

Si la capacité de l'unité de production de gaz naturel liquéfié déséquilibre le bilan fuel, il est possible de renvoyer tout ou partie de ces courants dans le courant de gaz de synthèse qui alimente l'unité de production d'hydrogène (au prix d'un compresseur).

Il est alors possible que les unités de production de gaz de synthèse et de liquéfaction de gaz naturel aient en commun l'ensemble des commodités du site en particulier :
- La connexion au réseau de gaz naturel ;
- La station de comptage et éventuellement détente/compression ;
- Un réseau de torche chaude et éventuellement de liquides froids ;
- L'ensemble des utilités du site (électricité, circuit de refroidissement, air instrumentation, azote...) ;
- Le réseau d'alimentation.

De plus, dans le cas où l'unité de production de gaz de synthèse produit de l'hydrogène, il est parfois demandé de liquéfier tout ou partie de l'hydrogène pour faciliter son transport ou son stockage par exemple.

Dans ce cas, il est possible de « pré-refroidir » l'hydrogène produit dans le liquéfacteur de gaz naturel jusqu'à une température de -160°C par exemple, puis d'achever de le liquéfier dans une unité dédiée.

## Revendications

1. Procédé de liquéfaction de gaz naturel en combinaison d'un procédé de production de gaz de synthèse, le procédé de liquéfaction comprenant les étapes suivantes :
- Etape a) : prétraitement d'un gaz naturel d'alimentation afin d'éliminer les impuretés susceptibles de geler au cours du procédé de liquéfaction au moyen d'un système de prétraitement mettant en oeuvre un courant de régénération;
- Etape b) : extraction, à partir du courant gazeux issu de l'étape a), d'un courant enrichi en hydrocarbures ayant plus de deux atomes de carbone et d'un courant appauvri en hydrocarbures ayant plus de deux atomes de carbone;
- Etape c) : liquéfaction du courant gazeux appauvri en hydrocarbures ayant plus de deux atomes de carbone issu de l'étape b);
le procédé de production de gaz de synthèse comprenant les étapes suivantes :
- Etape a') : désulfurisation à une température supérieure à 350°C d'un courant d'alimentation de gaz naturel ;
- Etape b') : pré-réformage facultatif, à une température supérieure à 500°C afin de convertir les chaînes hydrocarbures contenant au moins deux atomes de carbone du courant gazeux issu de l'étape a') en méthane ;
- Etape c') : réformage consistant à faire réagir à une température supérieure à 800°C le courant gazeux issu de l'étape a') ou b') avec de la vapeur d'eau pour produire de l'hydrogène, du dioxyde de carbone et du monoxyde de carbone ;
**caractérisé en ce qu'**au moins une partie de la source de chaleur nécessaire au procédé de production de gaz de synthèse est produite par au moins une partie du courant de régénération mis en oeuvre lors de l'étape a), l'énergie calorifique du courant de régénération mis en oeuvre lors de l'étape a) représentant de 5% à 35%, de préférence de 10% à 20%, de la quantité de fuel de la source de chaleur nécessaire au procédé de production de gaz de synthèse.

2. Procédé selon la revendication précédente **caractérisé en ce que** ledit système de prétraitement mis en oeuvre à l'étape a) est un système de séparation par adsorption.

3. Procédé selon la revendication 1, **caractérisé en ce que** ledit système de prétraitement mis en oeuvre à l'étape a) est un système de lavage aux amines suivi en aval d'une unité de séchage, cette unité de séchage mettant aussi en oeuvre un courant de régénération.

4. Procédé selon la revendication 2 **caractérisé en ce que** l'étape a) consiste en un prétraitement par adsorption au moyen d'un système d'adsorption comprenant entre deux et cinq contenants d'au moins une couche d'adsorbant et au moins un dispositif de chauffage et/ou de refroidissement d'un courant d'adsorption et/ou de régénération circulant dans ledit système d'adsorption, et **caractérisé en ce que** la vapeur d'eau issue du procédé de production de gaz de synthèse est mise en oeuvre pour réchauffer ledit courant de régénération.

5. Procédé selon la revendication 4, **caractérisé en ce que** le produit H₂S est extrait par catalyse.

6. Procédé selon l'une des revendications précédentes, **caractérisé en ce que** les impuretés susceptibles de geler au cours du procédé de liquéfaction éliminées au cours de l'étape a) comprennent l'eau, le dioxyde de carbone et les dérivés soufrés contenus dans le gaz d'alimentation

7. Procédé selon l'une des revendications précédentes, **caractérisé en ce qu'**au cours de l'étape c), le courant de gaz naturel appauvri en hydrocarbures ayant plus de deux atomes de carbone issu de l'étape b) est liquéfié à une température inférieure à -140°C au moyen d'unité de liquéfaction de gaz naturel comprenant au moins un échangeur de chaleur principal et un système de production de frigories.

8. Procédé selon l'une des revendications précédentes, **caractérisé en ce que** le courant d'alimentation de gaz naturel mis en oeuvre à l'étape a) et le courant d'alimentation de gaz naturel mis en oeuvre à l'étape a') proviennent d'un même courant d'alimentation de gaz naturel.

9. Procédé selon l'une des revendications précédentes, **caractérisé en ce que** l'unité de production de gaz de synthèse est une unité de production d'hydrogène par reformage à la vapeur ayant une capacité de production d'hydrogène d'au moins 20,000 Nm³/h.

10. Procédé selon l'une des revendications précédentes, **caractérisé en ce que** le courant de régénération mis en oeuvre lors de l'étape a) entraine un excès du bilan fuel de l'unité de production de gaz de synthèse et est renvoyé vers le courant d'alimentation de l'unité de production de gaz de synthèse.

## Patentansprüche

1. Erdgasverflüssigungsverfahren in Kombination mit einem Synthesegaserzeugungsverfahren, wobei das Verflüssigungsverfahren die folgenden Schritte umfasst:
- Schritt a): Vorbehandeln eines zugeführten Erdgases, um die Verunreinigungen, die während des Verflüssigungsverfahrens gefrieren könnten, mittels eines Vorbehandlungssystems zu beseitigen, das einen Regenerationsstrom einsetzt;
- Schritt b): Extrahieren, aus dem aus dem Schritt a) hervorgegangenen gasförmigen Strom, eines an Kohlenwasserstoffen mit mehr als zwei Kohlenstoffatomen angereicherten Stroms und eines an Kohlenwasserstoffen mit mehr als zwei Kohlenstoffatomen abgereicherten Stroms;
- Schritt c): Verflüssigen des an Kohlenwasserstoffen mit mehr als zwei Kohlenstoffatomen abgereicherten gasförmigen Stroms, der aus dem Schritt b) hervorgegangen ist;
wobei das Synthesegaserzeugungsverfahren die folgenden Schritte umfasst:
- Schritt a'): Entschwefeln eines zugeführten Erdgasstroms bei einer Temperatur von mehr als 350 °C;
- Schritt b'): Fakultatives Vorreformieren bei einer Temperatur von mehr als 500 °C, um die mindestens zwei Kohlenstoffatome enthaltenden Kohlenwasserstoffketten des aus dem Schritt a') hervorgegangenen gasförmigen Stroms in Methan umzuwandeln;
- Schritt c'): Reformieren, das darin besteht, den aus dem Schritt a') oder b') hervorgegangenen gasförmigen Strom bei einer Temperatur von mehr als 800 °C mit Wasserdampf reagieren zu lassen, um Wasserstoff, Kohlendioxid und Kohlenmonoxid zu erzeugen;
**dadurch gekennzeichnet, dass** mindestens ein Teil der Wärmequelle, die für das Synthesegaserzeugungsverfahren erforderlich ist, durch mindestens einen Teil des beim Schritt a) eingesetzten Regenerationsstroms erzeugt wird, wobei die Wärmeenergie des beim Schritt a) eingesetzten Regenerationsstroms 5 % bis 35 %, bevorzugt 10 % bis 20 % der Brennstoffmenge der Wärmequelle ausmacht, die für das Synthesegaserzeugungsverfahren erforderlich ist.

2. Verfahren nach dem vorhergehenden Anspruch, **dadurch gekennzeichnet, dass** das im Schritt a) eingesetzte Vorbehandlungssystem ein System zur Trennung durch Adsorption ist.

3. Verfahren nach Anspruch 1, **dadurch gekennzeichnet, dass** das im Schritt a) eingesetzte Vorbehandlungssystem ein System zur Aminwäsche ist, auf das stromab eine Trocknungseinheit folgt, wobei diese Trocknungseinheit auch einen Regenerationsstrom einsetzt.

4. Verfahren nach Anspruch 2, **dadurch gekennzeichnet, dass** der Schritt a) in einer Vorbehandlung durch Adsorption mittels eines Adsorptionssystems besteht, das zwischen zwei und fünf Behälter für mindestens eine Adsorberschicht und mindestens eine Vorrichtung zum Erwärmen und/oder Kühlen eines in dem Adsorptionssystem zirkulierenden Adsorptions- und/oder Regenerationsstroms umfasst, und **dadurch gekennzeichnet, dass** der aus dem Synthesegaserzeugungsverfahren hervorgegangene Wasserdampf eingesetzt wird, um den Regenerationsstrom anzuwärmen.

5. Verfahren nach Anspruch 4, **dadurch gekennzeichnet, dass** das Produkt H₂S katalytisch extrahiert wird.

6. Verfahren nach einem der vorhergehenden Ansprüche, **dadurch gekennzeichnet, dass** die während des Schritts a) beseitigten Verunreinigungen, die während des Verflüssigungsverfahrens gefrieren könnten, Wasser, Kohlendioxid und die in dem zuführten Gas enthaltenen Schwefelverbindungen umfassen.

7. Verfahren nach einem der vorhergehenden Ansprüche, **dadurch gekennzeichnet, dass** während des Schritts c) der an Kohlenwasserstoffen mit mehr als zwei Kohlenstoffatomen abgereicherte Erdgasstrom, der aus dem Schritt b) hervorgegangen ist, bei einer Temperatur von weniger als -140 °C mittels einer Erdgasverflüssigungseinheit verflüssigt wird, die mindestens einen Hauptwärmetauscher und ein Frigorienerzeugungssystem umfasst.

8. Verfahren nach einem der vorhergehenden Ansprüche, **dadurch gekennzeichnet, dass** der im Schritt a) eingesetzte zugeführte Erdgasstrom und der im Schritt a') eingesetzte zugeführte Erdgasstrom aus einem selben zugeführten Erdgasstrom stammen.

9. Verfahren nach einem der vorhergehenden Ansprüche, **dadurch gekennzeichnet, dass** die Synthesegaserzeugungseinheit eine Einheit zur Erzeugung von Wasserstoff durch Dampfreformierung ist, die eine Wasserstofferzeugungskapazität von mindestens 20.000 Nm³/h hat.

10. Verfahren nach einem der vorhergehenden Ansprüche, **dadurch gekennzeichnet, dass** der beim Schritt a) eingesetzte Regenerationsstrom zu einem Überschuss der Brennstoffbilanz der Synthesegaserzeugungseinheit führt und zu dem zugeführten Strom der Synthesegaserzeugungseinheit zurückgeleitet wird.

## Claims

1. Natural gas liquefaction process in combination with a synthesis gas production process, the liquefaction process comprising the following stages:
- stage a): pretreatment of a feed natural gas in order to remove the impurities liable to freeze during the liquefaction process by means of a pretreatment system using a regeneration stream;
- stage b): extraction, from the gas stream resulting from stage a), of a stream enriched in hydrocarbons having more than two carbon atoms and of a stream depleted in hydrocarbons having more than two carbon atoms;
- stage c) : liquefaction of the gas stream depleted in hydrocarbons having more than two carbon atoms resulting from stage b);
the synthesis gas production process comprising the following stages:
- stage a'): desulfurization at a temperature of greater than 350°C of a natural gas feed stream;
- stage b'): optional prereforming, at a temperature of greater than 500°C, in order to convert the hydrocarbon chains containing at least two carbon atoms of the gas stream resulting from stage a') into methane;
- stage c'): reforming consisting in reacting, at a temperature of greater than 800°C, the gas stream resulting from stage a') or b') with steam in order to produce hydrogen, carbon dioxide and carbon monoxide;
**characterized in that** at least a portion of the heat source required for the synthesis gas production process is produced by at least a portion of the regeneration stream used during stage a), the heat energy of the regeneration stream used during stage a) representing from 5% to 35%, preferably from 10% to 20%, of the amount of fuel of the heat source required for the synthesis gas production process.

2. Process according to the preceding claim, **characterized in that** said pretreatment system used in stage a) is an adsorption separation system.

3. Process according to Claim 1, **characterized in that** said pretreatment system used in stage a) is an amine scrubbing system followed downstream by a drying unit, this drying unit also using a regeneration stream.

4. Process according to Claim 2, **characterized in that** stage a) consists of a pretreatment by adsorption by means of an adsorption system comprising between two and five containers of at least one layer of adsorbent and at least one device for heating and/or cooling an adsorption and/or regeneration stream circulating in said adsorption system and **characterized in that** the steam resulting from the process for the production of synthesis gas is employed to reheat said regeneration stream.

5. Process according to Claim 4, **characterized in that** the product H₂S is extracted by catalysis.

6. Process according to one of the preceding claims, **characterized in that** the impurities liable to freeze during the liquefaction process which are removed during stage a) comprise the water, the carbon dioxide and the sulfur-comprising derivatives present in the feed gas.

7. Process according to one of the preceding claims, **characterized in that**, during stage c), the stream of natural gas depleted in hydrocarbons having more than two carbon atoms resulting from stage b) is liquefied at a temperature of less than -140°C by means of a natural gas liquefaction unit comprising at least one main heat exchanger and a system for producing cold.

8. Process according to one of the preceding claims, **characterized in that** the natural gas feed stream employed in stage a) and the natural gas feed stream employed in stage a') originate from one and the same natural gas feed stream.

9. Process according to one of the preceding claims, **characterized in that** the synthesis gas production unit is a unit for the production of hydrogen by steam reforming having a hydrogen production capacity of at least 20 000 Nm³/h.

10. Process according to one of the preceding claims, **characterized in that** the regeneration stream used during stage a) leads to an excess of the fuel balance of the synthesis gas production unit and is sent back to the feed stream of the synthesis gas production unit.
